# EUROPEAN PATENT SPECIFICATION

(11) **EP 4 291 516 B1**
(45) Date of publication and mention of the grant of the patent: **02.12.2026**
(21) Application number: 22702056.7
(22) Date of filing: 18.01.2022
(51) Int. Cl.: B65G 43/08, B65G 43/10, B65G 47/08, B65G 47/31

(54) **APPARATUS FOR IMPLEMENTING A PHYSICAL DISTANCE BETWEEN A GROUP OF CONTIGUOUS PACKAGES AND A SERIES OF ACCUMULATED PACKAGES**
VORRICHTUNG ZUR IMPLEMENTIERUNG EINES PHYSIKALISCHEN ABSTANDES ZWISCHEN EINER GRUPPE NEBENEINANDERLIEGENDER PAKETE UND EINER REIHE VON AKKUMULIERTEN PAKETEN
APPAREIL POUR METTRE EN PLACE UNE DISTANCE PHYSIQUE ENTRE UN GROUPE DE PAQUETS CONTIGUS ET UNE SÉRIE DE PAQUETS ACCUMULÉS

(30) Priority: 11.02.2021 IT 202100002873
(43) Date of publication of application: 20.12.2023
(73) Proprietor: Mas Pack S.p.A., 14050 San Marzano Oliveto (AT) (IT)
(72) Inventor: SCAGLIONE, Gian Luca, 14050 SAN MARZANO OLIVETO (IT); GRASSO, Valter, 14050 SAN MARZANO OLIVETO (IT)
(74) Representative: Garavelli, Paolo
(86) International application number: PCT/IT2022/050004
(87) International publication number: WO 2022/172301

(56) References cited:
- EP-A1- 2 107 018
- EP-B1- 1 280 720
- EP-B1- 2 749 511

## Description

The present invention refers to an apparatus for implementing a physical distance between a group of contiguous packages and a series of accumulated packages.

In general, the present invention relates to devices for feeding items or materials to the conveyors for feeding items from a single group of items arranged according to an ordered scheme.

In particular, the present invention relates to a sequential control of conveyor belts operating in combination, to devices that influence the relative position or attitude of the items during transport by the conveyors that arrange the items, for example by varying the distance between the individual items during transport by a series of conveyor belts, varying the relative speeds of the conveyor belts that make up the series.

EP-A1-2749511 relates to a unit for forming a layer of at least one batch having a length L of groups of items, comprising a first conveyor adapted to convey a plurality of groups in a neighboring relationship and driven by a first motor, a second conveyor adapted to separate the batch from the remaining groups for a space, a control unit to control the first motor and thus generate a speed profile of the conveyor, handling means to form the layer and adapted to handle the separated batch on an area defined by the second conveyor, detection means arranged on the second conveyor for detecting the presence of groups on the second conveyor, the detection means being arranged at a distance measured from the end of the second conveyor adjacent to the first conveyor along the direction along which the groups advance, the control unit being configured for updating the fast profile of the conveyor on the basis of the signal generated by the sensing means such that, in the updated configuration, the speed profile of the conveyor is such that the group travels for a length after the sensing means detects the presence of the batch on the conveyor.

EP-A1-1280720 relates to a conveyor induction system comprising a subsystem of a control point for measuring the point at which control of an item passes from one conveyor to another. The induction system also includes a subsystem to precisely create or control gaps between items on the conveyor system. The checkpoint subsystem monitors the position and speed changes of an item as it passes between two conveyor belts operating at different speeds. The gap control subsystem provides real-time monitoring and measurement of packet gaps. The measured packet blanks are fed into a feedback control system which alters the speed of a conveyor in order to modify the blank as desired, a control point determination module comprising a horizontal array of photo detectors comprising a first matrix of photo-emitters and a second series of photo-receptors, the emitters being positioned on an opposite side of the first transporter through and aligned with the receptors. The photo-detector array emits electromagnetic, infrared or other signals, from the emitters through the first carrier to the receptors that detect the emitted signal, provided that there is no item on the first carrier that obstructs the line of sight between an emitter and a receptor. The array of photodetectors is then able to determine where the spaces between items are, by determining which particular photodetectors are not obstructed at any given time. The horizontal array of photodetectors can be of any type of conventional array of photodetectors, such as those commercially available. The photodetector array should include photodetectors that are spaced relatively close together, so that accurate information about the location of the gaps and the location of items traveling on the first conveyor can be collected. While other distances are within the scope of the invention, a photodetector positioned every five millimeters along the length of the horizontal array is contemplated. More compactly spaced photo detectors would provide more accurate information about the location of items and gaps, if all other factors remained the same.

The array is located next to a portion of the first conveyor, a portion of the second conveyor and the space between the first conveyor and the second conveyor. The array preferably, although not necessarily, extends for a distance equal to the maximum expected length of the items to be transported. A gap detector receives the output from the array and uses it to determine the gap or spaces between items traveling within the array's detection zone. The gap detector detects these gaps by determining which individual photodetectors are blocked by items and which are not. Based on the number of photodetectors that are not obstructed between items or the distance between the set of continuous photodetectors, the length of a gap can be determined. Further, by determining which individual photodetectors are unobstructed, the position of the gap relative to the first conveyor can be determined based on the known position of each of the photodetectors.

Therefore, EP-B1-1280720 relates to a conveyor induction system comprising a first conveyor with adjustable speed, a second conveyor aligned with the first conveyor with adjustable speed and operable at a different speed than the first conveyor, a controller that emits a control for adjusting the speed of the first conveyor at adjustable speed in order to adjust a desired space between a first item and a second item as it travels on the first conveyor and on the second conveyor. A sensor repeatedly measures each space between a first item and a second item while the first item is at least partially positioned on the first adjustable speed conveyor and the second item is positioned on the second conveyor, the controller being a feedback controller that receives information from the sensor, calculating any difference between the measured gap and a desired gap, to allow at the output to regulate the speed of the conveyor with adjustable speed according to any difference between the measured space and the desired one.

EP-A1-2107018 discloses an apparatus according to the preamble of Claim 1.

The inventive solution of EP-A1-2749511 solves the problem of controlling the size and distance of a batch separated by groups of batches by counting the revolutions of the motor that moves a conveyor belt, starting from the detection of the transit of a front of batches, by means of the detection means positioned on the first and on the second conveyor belt. However, this solution does not allow the real-time control of the position of the separated batch, becoming critical in the presence of sliding of the batch compared to the fact that it may have lost adherence especially during the transfer from a conveyor belt to the conveyor belt characterized by different speeds and different friction conditions.

The solution to this problem is given by EP-A1-1280720 by means of which the position of the batch straddling the two conveyors is checked in real time, by means of a linear photoelectric detection matrix which, in addition to solving the control problem of the batch sliding on the belt, does not need to count the number of revolutions of the belt drive motor.

However, the solution of EP-A1-1280720 could be further simplified for a system consisting of an accumulator of batches without empty spaces, and a dispenser of a certain number of batches that are physically separate from the accumulated batches.

For this type of system, it is possible to concentrate the control in real time only on the conveyor belt, since, due to the intrinsic nature of a conveyor belt, the batches are contiguous and therefore without physical space. Therefore, after having guaranteed the accumulation condition on the conveyor belt, by means of object detectors, the real-time control is only needed on the conveyor belt where the conditions of reduced friction lead to sliding.

The real-time control made possible by linear matrix detectors of photoelectric sensors is suitable for optimizing the energy yield of the transport system by establishing a control of the electrical absorption of the motors distributed throughout the transport system. The start-up stop steps of the accumulation and transport belts can be optimized by varying the inclination of the respective deceleration and acceleration ramp. In case of heavy batches, the management of start and stop times becomes important to avoid overloading the electrical circuitry of the belt motors. By measuring the electrical absorption of the motors, it is possible to define an optimal ramp from the nominal speed value to the null value and vice versa. This optimal ramp profile value is a function of the length of the high friction belt section, as well as the weight of the supported batches, considering that, during the acceleration and deceleration ramp, the batches on the high friction belt are called to push the batches that are entering the area of the low friction belt.

Object of the present invention is solving the aforementioned prior art problems by providing an apparatus for implementing a physical distance between a group of contiguous packages and a series of accumulated packages which allows preparing the packages to be palletized by means of a robot of a line fed in continuous from contiguous packages.

A further object of the present invention is providing an apparatus for implementing a physical distance between a group of contiguous packages and a series of accumulated packages which allows optimizing the dynamic behavior of the package feeding line to limit the electrical absorption overload in relation to the size and weight of the packages.

The aforesaid and other objects and advantages of the invention, as will emerge from the following description, are achieved with an apparatus for implementing a physical distance between a group of contiguous packages and a series of accumulated packages, such as that described in claim 1. Preferred embodiments and non-trivial variations of the present invention are the subject matter of the dependent claims.

It is understood that all attached claims form an integral part of the present description.

It will be immediately obvious that innumerable variations and modifications (for example relating to shape, dimensions, arrangements and parts with equivalent functionality) can be made to what is described.

The present invention will be better described by some preferred embodiments thereof, provided by way of non-limiting example, with reference to the attached drawings, in which:
- FIG. 1 shows a functional diagram of an apparatus embodiment to implement a physical distance between a group of contiguous packages and a series of accumulated packages, according to the present invention;
- FIG. 2 shows a functional diagram of a further embodiment of the apparatus to implement a physical distance between a group of contiguous packages and a series of accumulated packages, according to the present invention;
- FIG. 3 shows an enlarged portion III of the previous figure; and
- FIG. 4 shows a relevant part of the previous figure, in different functional configurations of an apparatus embodiment to implement a physical distance between a group of contiguous packages and a series of accumulated packages, according to the present invention.

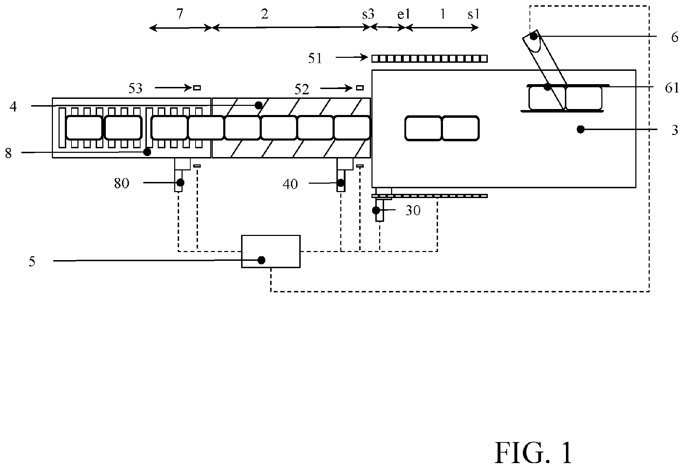

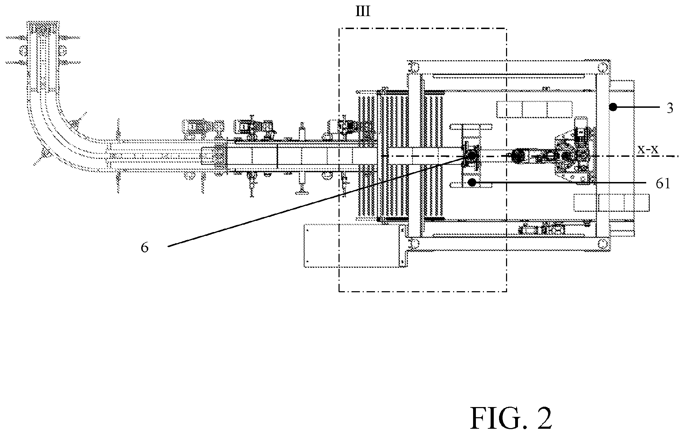

Referring to FIG. 1 and FIG. 2, it is possible to note an apparatus for implementing a physical distance between a group of contiguous packages 1 and a series of accumulated packages 2, the group of contiguous packages 1 being in continuous advancement on a conveyor belt 3 driven by a first motor 30, the series of accumulated packages 2 being provided to fill an accumulator belt 4 driven by a second motor 40 and connected in series to the conveyor belt 3, this apparatus comprising a controller 5 of the motion of the accumulator belt 4 by means of first detection means 51 of the group of contiguous packages 1 and second detection means 52 of the series of accumulated packages 2.

Advantageously, the first detection means 51 of the group of contiguous packages 1 are capable of continuously acquiring the dimension comprised between a start s1 and an end e1 along the direction of advancement and the physical distance between the end e1 and an inlet s3 of the belt conveyor 3, to allow the motion of the accumulator belt 4 to be synchronized with that of the conveyor belt 3, during the acquisition of the dimension between a start s1 and an end e1, and to allow the motion of the accumulator belt 4 to be stopped during acquisition of the physical distance between the end e1 and the entrance s3.

The group of contiguous packages 1 is moved by means of gripping means 61 of a robot 6 on the conveyor belt 3 having a first friction (reduced friction); the series of accumulated packages 2 is provided to fill the accumulator belt 4 having a second friction (high friction) greater than the first friction; the series of accumulated packages 2 is fed by a series of sliding packages 7 on at least one movable belt 8 with variable friction driven by a third motor 80 and equipped with third detection means 53 of the series of sliding packages 7.

Preferably, the conveyor belt 3 is smooth, the accumulator belt 4 is rubberized, the movable belt 8 with variable friction is a chain with idle rollers.

During the acquisition of the dimension between the start s1 and the end e1, the controller 5 allows to set a deceleration ramp of the accumulator belt 4, as function of a reference value of the electric deceleration absorption A40-of the second motor 40; moreover, during the acquisition of the physical distance between the end e1 and the input s3, the controller 5 allows to set an acceleration ramp of the accumulator belt 4, as a function of a reference value of electrical acceleration absorption A40+ of the second motor 40.

Preferably, the electrical deceleration absorption reference value A40- corresponds to the updated electrical deceleration absorption measurement in a previous dimensional acquisition, just as the electrical acceleration absorption reference value A40+ of the second motor 40 corresponds to the updated measurement of electrical acceleration absorption in a previous acquisition of the physical distance.

Referring to FIG. 1, it is possible to note that the first detection means 51 of the group of contiguous packages 1 consist of a photoelectric barrier composed of an emitter unit and a receiver unit, developed along the advancement direction, which can be used for measuring objects, synchronization between the two units being able to take place optically or via cable. The second detection means 52 of the series of accumulated packages 2 and the third detection means 53 of the series of sliding packages 7 consist of a photoelectric barrier composed of an emitter unit and a receiver unit, usable for detecting objects.

Referring to FIG. 2, it is possible to note that, in a further configuration, both the first detection means 51 of the group of contiguous packages 1, and the second detection means 52 of the series of accumulated packages 2, consist of a photoelectric barrier composed of an emitter unit and of a receiver unit, developed along the advancement direction, usable for measuring objects, the synchronization between the two units being able to take place optically or via cable, while the third detection means 53 of the series of sliding packages 7 consist of a barrier photoelectric unit consisting of an emitter unit and a receiver unit, which can be used for object detection.

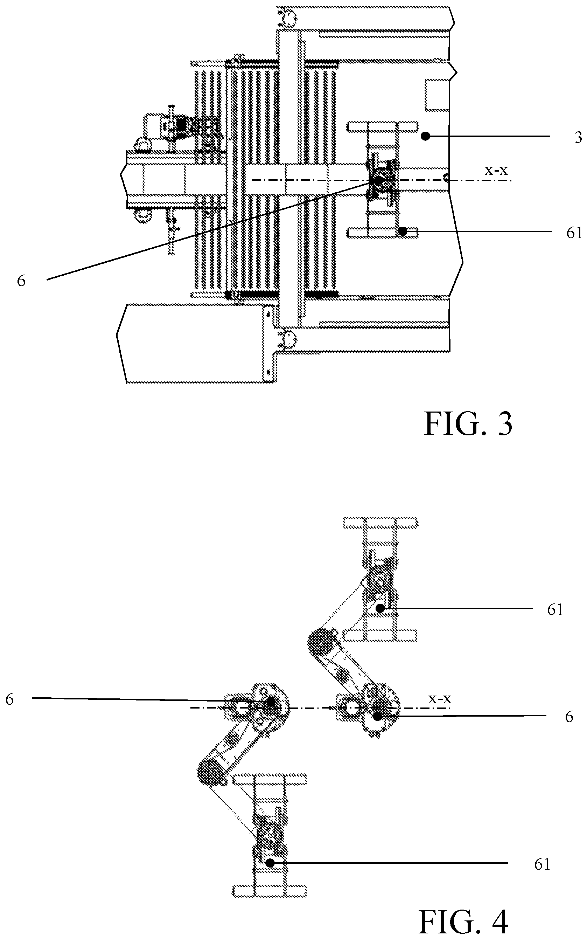

Referring to FIG. 3 and FIG. 4, it is possible to note that the gripping means 61 of the robot 6 are able to stand in wait for the group of contiguous packages 1 and to travel a length along the advancement direction of the conveyor belt 3 to move the group of contiguous packages 1.

The robot 6 lies on the center line x-x of the conveyor belt 3 in order to optimize a path to move the group of contiguous packages 1.

As examples of use, the following can be made.

A carton feeder for transporting cartons/boxes/packages with an advancement direction which can be in the short side or long side.

A carton transport A with roller chain for accumulation and a transport of cartons B with smooth belt. There are two photocells ft1, ft2 on transport A. When the cartons engage photocell ft2, after a delay they determine the start of transport B. Transport B stops if photocell ft2 disengages. The photocell ft1 is used to increase the speed. When the cartons reach and engage the photocells ft3, ft4, they determine the start of transport C, rubberized belt.

A transport of cartons C with rubber mat. With the engagement of the photocells ft2, ft3, ft4, the continuous advancement of the cartons from B to C takes place until the photocell ft5 is engaged. As long as a photocell ft5 is not engaged, the conveyors A, B, C remain active.

The motors of the transport C, D, move at a controlled speed to have the synchronism of the advancement of the cartons. A photocell ft6 detects the start of the carton to determine the length of the trial, made up of one, two or more cartons, and, once the length has been reached, it will stop the conveyor C to obtain a distance between one trial and the next, after which the start of the conveyor C will be repeated, always if the photocells from ft2 to ft5 are engaged.

A transport of cartons D with smooth belt. Conveyor always in operation, unless there are alarms, on which the plane is formed according to the palletization scheme.

In this station there is a robot that, with a gripper, manipulates the cartons that are received according to a specific program to obtain the required palletization scheme.

## Claims

1. Apparatus for implementing a physical distance between a group of contiguous packages (1) in continuous advancement on a conveyor belt (3) and a series of accumulated packages (2) on an accumulator belt (4) connected in series to the conveyor belt (3), the apparatus comprising:
- the conveyor belt (3) having a first friction, i.e. a reduced friction, driven by a first motor (30);
- the accumulator belt (4) having a second friction, i.e. a high friction, higher than the first friction, the accumulator belt (4) being driven by a second motor (40);
- a controller (5) of the motion of the accumulator belt (4);
- first detection means (51) of the group of contiguous packages (1) capable of continuously acquiring a dimension comprised between a start (s1) and an end (e1) along a direction of advancement and a physical distance between said end (e1) and an inlet (s3) of the conveyor belt (3);
the apparatus further **characterised by** comprising:
- at least one movable belt (8) with variable friction;
- second detection means (52) of the series of accumulated packages (2), the series of accumulated packages (2) fed by a series of packages (7) sliding on the at least one movable belt (8) with variable friction, the movable belt (8) being driven by a third motor (80) and equipped with third sensing means (53) of the series of sliding packages (7);
- a robot (6) equipped with gripping means (61) to move the group of contiguous packages (1) on the conveyor belt (3);
wherein at least the first detection means (51) of the group of contiguous packages (1) consist of a photoelectric barrier composed of an emitter unit and a receiver unit, developed along the forward direction, which can be used for measurement of objects, the synchronization between the two units being designed to take place optically or via cable.

2. Apparatus according to the preceding claim, **characterized in that** the conveyor belt (3) is smooth, the accumulator belt (4) is rubberized, and the movable belt (8) is a chain with idle rollers.

3. Apparatus according to any one of the preceding claims, **characterized in that**, during an acquisition of the dimension comprised between said start (s1) and said end (e1), the controller (5) is designed to set a deceleration ramp of the belt accumulator (4), as a function of a reference value of electrical deceleration absorption (A40-) of the second motor (40), and that, during the acquisition of the physical distance between said end (e1) and said input (s3), the controller (5) is designed to set an acceleration ramp of the accumulator belt (4), as a function of an electrical acceleration absorption reference value (A40+) of the second motor (40).

4. Apparatus according to the preceding claim, **characterized in that** said reference value of electrical deceleration absorption (A40-) corresponds to the updated measure of electrical deceleration absorption in a previous acquisition of the dimension, as well as said reference value of electrical acceleration absorption (A40+) of the second motor (40) corresponds to the updated measurement of electrical acceleration absorption in a previous acquisition of the physical distance.

5. Apparatus according to any one of the preceding claims, **characterized in that** the second detection means (52) of the series of accumulated packages (2) consist of a photoelectric barrier composed of an emitter unit and a receiver unit, developed along the advancement direction, usable for measuring objects, synchronization between the two units being able to take place optically or via cable, and the third detection means (53) of the series of sliding packages (7) consist of a photoelectric barrier consisting of an emitter unit and a receiver unit, which can be used for object detection.

6. Apparatus according to any one of the preceding claims, **characterized in that** said gripping means (61) of the robot (6) are provided for stationary waiting for the group of contiguous packages (1) and to travel a section along the direction of advancement conveyor belt (3) to move the group of contiguous packages (1).

7. Apparatus according to the preceding claim, **characterized in that** the robot (6) lies on the center line x-x of the conveyor belt (3) in order to be able to optimize a path for moving the group of contiguous packages (1).

## Patentansprüche

1. Vorrichtung zur Herstellung eines physikalischen Abstands zwischen einer Gruppe zusammenhängender Pakete (1), die sich kontinuierlich auf einem Förderband (3) bewegen, und einer Reihe von angesammelten Paketen (2) auf einem in Reihe mit dem Förderband (3) geschalteten Akkumulatorband (4), wobei die Vorrichtung Folgendes umfasst:
- das Förderband (3) mit einer ersten Reibung, d. h. einer reduzierten Reibung, das von einem ersten Motor (30) angetrieben wird;
- der Akkumulatorriemen (4) mit einer zweiten Reibung, d. h. einer hohen Reibung, die höher ist als die erste Reibung, wobei der Akkumulatorriemen (4) von einem zweiten Motor (40) angetrieben wird;
- eine Steuerung (5) der Bewegung des Akkumulatorriemens (4);
- erste Detektionseinrichtung (51) für die Gruppe zusammenhängender Pakete (1), die in der Lage ist, kontinuierlich eine Dimension zwischen einem Anfang (s1) und einem Ende (e1) entlang einer Vorschubrichtung und einen physikalischen Abstand zwischen diesem Ende (e1) und einem Eingang (s3) des Förderbandes (3) zu erreichen;
der Apparat ist **dadurch gekennzeichnet, dass** er zum Verstehen befähigt ist;
- mindestens ein Förderband (8) mit variabler Reibung;
- zweites Mittel zum Erfassen (52) der Reihe der angesammelten Pakete (2), wobei die Reihe der angesammelten Pakete (2) von einer Reihe gleitender Pakete (7) auf dem mindestens einen Förderband (8) mit variabler Reibung gespeist wird, wobei das Förderband (8) von einem dritten Motor (80) angetrieben wird und mit einem dritten Mittel zum Erfassen (53) der Reihe gleitender Pakete (7) ausgestattet ist;
- ein Roboter (6), der mit Greifmitteln (61) ausgestattet ist, um die Gruppe zusammenhängender Pakete (1) auf dem Förderband (3) zu bewegen;
wobei die erste Detektionseinrichtung (51) der Gruppe zusammenhängender Pakete (1) aus einer in Fahrtrichtung entwickelten fotoelektrischen Barriere besteht, die aus einer Sendeeinheit und einer Empfangseinheit besteht und zur Messung von Objekten geeignet ist, wobei die Synchronisation zwischen den beiden Einheiten optisch oder über ein Kabel erfolgen soll.

2. Vorrichtung nach dem vorhergehenden Anspruch, **dadurch gekennzeichnet, dass** das Förderband (3) glatt, das Akkumulatorband (4) gummiert und das bewegliche Band (8) eine Kette mit Leerlaufrollen ist.

3. Vorrichtung nach einem der vorhergehenden Ansprüche, **dadurch gekennzeichnet, dass** die Steuerung (5) während der Erfassung der Abmessung zwischen dem Startpunkt (s1) und dem Endpunkt (e1) so ausgelegt ist, dass sie eine Verzögerungsrampe des Akkumulatorbandes (4) in Abhängigkeit von einem Referenzwert der elektrischen Verzögerungsaufnahme (A40-) des zweiten Motors (40) einstellt, und dadurch, dass die Steuerung (5) während der Erfassung des physikalischen Abstandes zwischen dem Endpunkt (e1) und dem Eingang (s3) so ausgelegt ist, dass sie eine Beschleunigungsrampe des Akkumulatorbandes (4) in Abhängigkeit von einem Referenzwert der elektrischen Beschleunigungsaufnahme (A40+) des zweiten Motors (40) einstellt.

4. Vorrichtung nach dem vorhergehenden Anspruch, **dadurch gekennzeichnet, dass** der Referenzwert der elektrischen Verzögerungsabsorption (A40-) dem aktualisierten Messwert der elektrischen Verzögerungsabsorption bei einer vorherigen Dimensionserfassung entspricht, ebenso wie der Referenzwert der elektrischen Beschleunigungsabsorption (A40+) des zweiten Motors (40) dem aktualisierten Messwert der elektrischen Beschleunigungsabsorption bei einer vorherigen Erfassung der physikalischen Distanz entspricht.

5. Vorrichtung nach einem der vorhergehenden Ansprüche, **dadurch gekennzeichnet, dass** die zweite Detektionseinrichtung (52) der Reihe von akkumulierten Paketen (2) aus einer in Vorschubrichtung entwickelten, aus einer Sendereinheit und einer Empfängereinheit bestehenden fotoelektrischen Barriere besteht, die zur Messung von Objekten geeignet ist, wobei die Synchronisation zwischen den beiden Einheiten optisch oder über ein Kabel erfolgt, und die dritte Detektionseinrichtung (53) der Reihe von gleitenden Paketen (7) aus einer aus einer Sendereinheit und einer Empfängereinheit bestehenden fotoelektrischen Barriere besteht, die zur Detektion von Objekten geeignet ist.

6. Vorrichtung nach einem der vorhergehenden Ansprüche, **dadurch gekennzeichnet, dass** die Greifeinrichtung (61) des Roboters (6) so ausgelegt ist, dass sie stillsteht und auf die Gruppe zusammenhängender Pakete (1) wartet und sich dann in Fahrtrichtung des Förderbandes (3) bewegt, um die Gruppe zusammenhängender Pakete (1) zu transportieren.

7. Vorrichtung nach dem vorhergehenden Anspruch, **dadurch gekennzeichnet, dass** der Roboter (6) auf der Mittellinie x-x des Förderbandes (3) liegt, um einen optimalen Pfad für den Transport der Gruppe zusammenhängender Pakete (1) zu finden.

## Revendications

1. Appareil permettant de mettre en œuvre une distance physique entre un groupe de colis contigus (1) avançant en continu sur un convoyeur (3) et une série de colis accumulés (2) sur un convoyeur accumulateur (4) relié en série au convoyeur (3), l'appareil comprenant:
- la bande transporteuse (3) ayant un premier frottement, c'est-à-dire un frottement réduit, entraînée par un premier moteur (30);
- la courroie d'accumulateur (4) ayant un deuxième frottement, c'est-à-dire un frottement élevé, supérieur au premier frottement, la courroie d'accumulateur (4) étant entraînée par un deuxième moteur (40);
- un contrôleur (5) du mouvement de la courroie d'accumulation (4);
- premier moyen de détection (51) du groupe de paquets contigus (1) capable d'acquérir en continu une dimension entre un début (s1) et une fin (e1) le long d'une direction d'avancement et une distance physique entre ladite fin (e1) et une entrée (s3) du tapis roulant (3);
l'appareil étant caractérisé **caractérisé en ce que** il comprend;
- au moins une courroie mobile (8) à friction variable;
- deuxième moyen de détection (52) de la série de paquets accumulés (2), la série de paquets accumulés (2) étant alimentée par une série de paquets coulissants (7) sur au moins une courroie mobile (8) à friction variable, la courroie mobile (8) étant entraînée par un troisième moteur (80) et équipée d'un troisième moyen de détection (53) de la série de paquets coulissants (7);
- un robot (6) équipé de moyens de préhension (61) pour déplacer le groupe de colis contigus (1) sur le tapis roulant (3);
dans lequel au moins le premier moyen de détection (51) du groupe de paquets contigus (1) consiste en une barrière photoélectrique composée d'une unité émettrice et d'une unité réceptrice, développée dans le sens du déplacement, utilisable pour mesurer des objets, la synchronisation entre les deux unités étant conçue pour se produire optiquement ou par câble.

2. Appareil selon la revendication précédente, **caractérisé en ce que** la bande transporteuse (3) est lisse, la bande d'accumulation (4) est caoutchoutée, la bande mobile (8) est une chaîne avec des rouleaux libres.

3. Appareil selon l'une quelconque des revendications précédentes, **caractérisé en ce que**, lors de l'acquisition de la dimension entre ledit début (s1) et ladite fin (e1), le contrôleur (5) est conçu pour définir une rampe de décélération de la courroie d'accumulation (4), en fonction d'une valeur de référence d'absorption électrique de décélération (A40-) du deuxième moteur (40), et **en ce que**, lors de l'acquisition de la distance physique entre ladite fin (e1) et ladite entrée (s3), le contrôleur (5) est conçu pour définir une rampe d'accélération de la courroie d'accumulation (4), en fonction d'une valeur de référence d'absorption électrique d'accélération (A40+) du deuxième moteur (40).

4. Appareil selon la revendication précédente, **caractérisé en ce que** ladite valeur de référence d'absorption électrique de décélération (A40-) correspond à la mesure mise à jour de l'absorption électrique de décélération lors d'une acquisition précédente de la dimension, de même que ladite valeur de référence d'absorption électrique d'accélération (A40+) du deuxième moteur (40) correspond à la mesure mise à jour de l'absorption électrique d'accélération lors d'une acquisition précédente de la distance physique.

5. Appareil selon l'une quelconque des revendications précédentes, **caractérisé en ce que** le deuxième moyen de détection (52) de la série de paquets accumulés (2) consiste en une barrière photoélectrique composée d'une unité émettrice et d'une unité réceptrice, développée dans le sens de l'avancement, utilisable pour la mesure d'objets, la synchronisation entre les deux unités étant conçue pour se faire optiquement ou par câble, et le troisième moyen de détection (53) de la série de paquets coulissants (7) consiste en une barrière photoélectrique composée d'une unité émettrice et d'une unité réceptrice, utilisable pour la détection d'objets.

6. Appareil selon l'une quelconque des revendications précédentes, **caractérisé en ce que** lesdits moyens de préhension (61) du robot (6) sont conçus pour rester stationnaires en attendant le groupe de colis contigus (1) et pour parcourir une distance dans le sens d'avancement du tapis roulant (3) afin de déplacer le groupe de colis contigus (1).

7. Appareil selon la revendication précédente, **caractérisé en ce que** le robot (6) se trouve sur la ligne centrale x-x du tapis roulant (3) afin d'optimiser un chemin pour déplacer le groupe de colis contigus (1).
